Europäisches Patentamt

European Patent Office

Office européen des brevets

(19)

(11) **EP 1 515 263 A2**

(12) **EUROPEAN PATENT APPLICATION**

(43) Date of publication:
**16.03.2005 Bulletin 2005/11**

(51) Int Cl.⁷: **G06K 15/00**, G06F 3/00,
G06K 11/00

(21) Application number: **04104289.6**

(22) Date of filing: **06.09.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **10.09.2003 US 661001**

(71) Applicant: **Hewlett-Packard Development
Company, L.P.
Houston, TX 77070 (US)**

(72) Inventors:
• **Mackenzie, Andrew
08036 Barcelona (ES)**

• **Bartolome, Emiliano
36393 Sabaris-Baiona, Pontevedra (ES)**
• **Bonner, Matt
Portland, OR 97232 (US)**
• **Combe, Jean-Michel
38420 Domene (FR)**
• **Gonzalez, Manuel
08012 Barcelona (ES)**

(74) Representative: **Leadbetter, Benedict et al
Hewlett-Packard Espanola, S.L.,
Legal Department,
Avda Graells, 501
08190 Sant Cugat del Vallès (ES)**

(54) **Method for printing digital documents**

(57)    A method of printing a document containing a printed pattern of position identification pattern markings comprising: providing to a printer a set of print instructions which define the content of a document; generating at the printer a pattern using pattern information that is independent from the print instructions; and, printing a document that comprises both the content and the pattern.

Fig 1

EP 1 515 263 A2

**Description**

BACKGROUND OF THE INVENTION

This invention relates to printing digital document, and to digital pen and paper systems- sometimes called pen computing- in which documents are produced that include position identification pattern made up of markings printed on the document which can be detected by a suitable detection system and used to distinguish different positions on the documents. It also relates to a system for same and to a combination of a printer and a printer driver. It is especially, but not exclusively, relevant to the generation of digital documents.

It is known to use documents having such position identification markings in combination with a pen or other device having an imaging system, such as an infra red camera, within it, which is arranged to image a small area of the page close to the pen nib. The pen includes a processor having image processing capabilities and a memory and is triggered by a force sensor in the nib to record images from the camera as the pen is moved across the document. From these images the pen can determine the position of any marks made on the document by the pen. The markings can be stored either directly as graphic images, or perhaps as a sequence of "strokes/position on the document/time", which can be passed from the pen to a suitable processor such as a personal computer.

The combination of the pen and the patterned paper allows, for example, forms with checkboxes on to be provided and the markings of the check boxes with the pen detected. In further applications the pen markings recorded by the pen may be analysed to recognise handwriting characters.

For such a system to be able to handle a large number of documents it is desirable for the system to be able to print a different pattern on every document. In this way, the pen cannot only tell where it is on a document but also what document it is. The size of the pattern, its so-called area in pattern space, should be made very large and the allocation of portions of the pattern to documents recorded. By recording the portion of pattern allocated to each document on a database, which can be cross-reference with the pen readings and also a store of the document contents, a very flexible and powerful system can be achieved.

An example of a system which employs this type of digital paper is known from Anoto AB, and information about the requirements for a suitable pattern can be found on their website at www.anoto.com.

At present, production of documents including pattern is a two-pass process in which a batch of patterned paper is produced using a technique such a offset printing. Once this blank patterned paper has been printed, a user can create a file which contains the content (i.e. all printed parts of the document other than the pattern) and a second print pass is made in which the content is printed over the top of the pattern. This is a slow and cumbersome process and limited availability of pre-printed blank paper may limit the speed and convenience at which digital documents can be produced.

SUMMARY OF THE INVENTION

In accordance with a first aspect the invention provides a method of printing a document containing a printed pattern of position identification pattern markings comprising: providing to a printer a set of print instructions which define the content of a document; generating at the printer a pattern using pattern information that is independent from the print instructions; and, printing a digital document that combines both content as defined by the print instructions and the pattern generated by the printer.

Thus, according to at least one embodiment of the invention there is provided the advantage that the printer creates the required pattern to print a digital version of the document, enabling it to be used in a digital pen and paper system. Because the printer generates the pattern - as distinct from sending to the printer a complete description of the pattern with the content of the document - the amount of information that needs to be sent to the printer is reduced.

It will be understood that by the phrase "pattern information that is independent from the print instructions" we mean information that does not form part of the file or files sent to the printer which make up the document it is asked to print. By print instruction we mean any instructions which can be sent to a printer and which can be in any format that is understood by a printer, the pattern instructions being provided as part of those instructions. The print instructions could define a document which is blank other than for pattern, i.e. it has a blank content.

The print instructions may include at least one pattern instruction indicating that a pattern is to be added by the printer to the document and the printer adds a pattern to the printed document in response to the at least one pattern instruction. The size of the description (the file of instructions sent to the printer) can therefore be greatly reduced. This reduces the time taken to transmit the file to the printer, freeing up the host to perform other tasks. Also, since the task of generating/allocating the actual pattern is performed at the printer the host is further freed to perform other tasks.

The pattern instruction could be included in the set of print instructions in many forms. It could simply be an instruction to "add a pattern" to the whole or part of a document. It could be an identity (ID) instruction which identifies a portion of pattern from a pattern space, or the type of pattern to be allocated or an algorithm that may be used to generate it. In some cases the pattern instruction can be thought of as a request for the printer to "add this pattern" or "add this portion of pattern" when printing.

The additional, independent, pattern information used by the printer that is not included in the print instructions may be stored locally at the printer- perhaps in a permanent memory- or remotely on a device which can be accessed by the printer across a network.

In a notable arrangement the description sent to the printer may include a pattern instruction which comprises an address. This address may indicate the location of a server on a network to which the printer is connected. The printer can request a pattern from this server to include in the document or request the additional information needed to create the pattern.

This provides the still further benefit that the processing overheads involved in allocating or generating the actual pattern for the printer are passed onto a remote processor (identified by the address) which frees the host and the printer to get on with other tasks. The host does not in fact need to have any direct connection to the processor that allocates or generates the pattern, allowing the document to be created "off-line" without any access to applications for the generation of the pattern.

This later feature is of great benefit in at least one system in which a document is created and allocated a pattern for subsequent printing. The document and an ID indicating which portion of pattern is to be used are stored on a server, and a user is given only the document and pattern ID. When a user is ready to print the document and ID are sent to the printer and the printer itself retrieves or generates the actual pattern identified by the ID. Of course, if the printer is given enough "intelligence" to create the pattern itself from the ID (by a stored function, library or look-up table) then the link to the server could be removed.

It will be appreciated that printer could be a stand-alone device which incorporates all of the features needed to generate and print pattern. The function of a pattern allocating server described hereinbefore could be included in the printer enabling it to allocate and generate pattern without the need to contact an external server.

A further advantage of providing a link from the printer to a server which sends pattern information is that security rights can be attached to the document. For example, the printer may identify itself to the server when requesting pattern and the server can check that the printer has the appropriate permission to print the document associated with the pattern ID.

In a still further alternative the instructions sent to the printer comprise pattern instructions telling the printer where to print pattern markings whilst leaving the actual generation of the markings to the printer itself. The printer is therefore sent compressed pattern information- a sort of shorthand of what the pattern comprises- whilst the printer fills in the missing information to produce the required image in the device space.

This last arrangement has the advantage that the pattern is produced independent of the resolution of the printer. Once it has been told the layout of the pattern- i.e. where the markings go- the printer can produce the actual pattern in the best way it can, choosing the appropriate markings and deciding for itself exactly how to reproduce the pattern that has been requested and where exactly to place them in the printed document. This reduces the amount of knowledge that the host- and in particular the printer driver- needs to have of the exact capabilities of the printer such as the printer resolution.

The method may further comprise generating the pattern in pieces that are smaller than the whole pattern needed for the document, a first piece being generated and the portion of the document including that piece being printed before, or during the generation of one or more of the remaining pieces. This may be continued until the whole document is printed.

Each piece may comprise a band of the document. Generating pattern in this way, and sending the piece with the corresponding content to be printed reduces the amount of memory needed to store the pattern during printing.

In embodiments according to the present aspect of the invention, the printer may, for example, be adapted to produce a bitmap corresponding to the content and a bitmap corresponding to the pattern and to combine the two bitmaps to produce a bitmap corresponding to the document to be printed.

In embodiments according to the present aspect of the invention, the set of instructions generated at a host device may comprise printer job language (PJL) instructions indicating that a pattern is to be included and/or instructions in a page description language defining the content.

According to a second aspect the invention provides apparatus for printing a document containing position identification pattern markings which includes a printer having an processing means arranged to create the pattern to be printed in response to receipt of a set of print instructions which define the content of the document, the processing means creating the pattern using pattern information that is independent from the set of print instructions.

The apparatus may comprise either a stand-alone printer which can be connected to a host device such as a personal computer, or could comprise a part of a photocopier. The copier could be multifunctional allowing it to function as a printer or as a photocopier. When functioning as a printer it will receive documents to print electronically across a network. Where it functions as a photocopier it captures documents using a scanner.

Where a photocopier is provided, the set of print instructions will comprise a set of output signals generated by a scanner of the photocopier when an original document is scanned. Where it is a stand alone printer it will comprise a print file sent by a host device to the printer, or perhaps pre-stored in an area of memory of the printer.

Whilst appreciating the advantages that can be obtained by providing a printer or a copier that can print digital documents, the applicants have realised that it is in many cases advantageous to provide for a way of identifying copies that are printed.

Optionally, the apparatus comprises a part of a photocopier in which the print instructions comprise an electronic version of an original document which is captured by a scanner of the photocopier.

Optionally, the print instructions include at least one pattern instruction indicating that a pattern is to be printed on the document

Optionally, the apparatus comprises a printing application stored on a host device which is arranged to receive a file defining the content of the document and to generate a set of print instructions which comprise instructions that define the content of the document to be printed and at least one pattern instruction which indicates that a pattern is to be included in the printed documents.

Optionally, the interpreting means comprises a raster image processor and in which the print instructions produced by the host device are in a page description and/or print job language.

Optionally, the pattern instruction in the print instruction set comprises a PJL command and in which the RIP is provided with a function which is called by the PJL command.

Optionally, the pattern instruction comprises a network address and in which the printer includes a network connection to a processor identified by the network address, pattern request means for requesting pattern from the processor, and pattern receiving means for receiving from the processor an appropriate pattern in response to the pattern request.

Optionally, the pattern requesting and receiving means comprises program instructions stored in a memory of the processor which are executed whenever the RIP processes a pattern instruction in a print instruction set.

Optionally, apparatus comprises a printer and the print instructions include at least one print instruction that comprises a pattern ID.

Optionally, the pattern instruction comprises an address, the method comprising at the printer requesting an appropriate pattern from a server identified by the address, and adding the pattern received in response to the request to the document bitmap

Optionally, the print instructions include a plurality of pattern instructions which each indicate the location of at least one position identification marking in the document, the printer generating the pattern marking to be provided at the indicated location independent of the content of the print instructions.

According to an alternative to the present aspect of the invention there is provided, a controller for a photocopier comprising: input means for receiving an input image from a scanner of the photocopier; output means for passing an output image to a printer of the photocopier; and a processing means which is adapted to modify the input image to produce the output image by embedding a pattern of positional markings within the image of the scanned document which markings can be detected by a suitable detection system and used to distinguish different positions on the documents.

According to a third aspect the invention provides a method of printing a document comprising: receiving a set of print instructions defining the content of a document; generating a set of different patterns of position identification markings; and, printing a plurality of copies of the document in which each printed copy comprises both the content and one of the patterns of the set.

According to a still further, fourth, aspect the invention provides apparatus arranged to produce multiple copies of a source document comprising: receiving means for receiving a set of print instructions defining the content of the source document; processing means for generating a set of different patterns or portions of pattern; and, printing means for printing a plurality of copies of the source document in which each printed copy comprises both the content of the source document and one of the patterns of the set.

Optionally, the means for adding the pattern to the document may reside at the printer, allowing the advantages of reduced file size of the first aspect of the invention to be combined with the ability to print many different copies.

Alternatively, the means for adding pattern may reside on the host computer. Optionally, the means for adding pattern may comprise a printer driver or a filer driver.

Also, as indicated before, the apparatus may comprise a stand alone printer driver or perhaps a digital photocopier.

Optionally, where it comprises a photocopier the apparatus may include an optical scanner for scanning the source document and producing output signals representing an image of the source document to which the pattern is added, the processing means comprises an image processor for performing at least one processing step on the output signals produced by the scanner to produce modified signals representing a modified image of the scanned document, and in which the printing means is responsive to the modified image signals for printing a modified image represented by the modified image signals.

With the photocopier the processing step performed by the processor comprises embedding a pattern of positional markings within the image of the scanned document which markings can be detected by a suitable detection system and used to distinguish different positions on the documents.

The processing step performed by the processing means may comprise embedding a different pattern of positional markings within each of the modified images in the set which markings can be detected by a suitable detection system and used to distinguish between different positions on the documents.

It is preferred that the copy documents differ in that they each include a different portion or type of positional marking pattern. However, they may differ in other ways such as the addition of a barcode or a serial number or other marking. These may be visible to the human eye and/or may be machine readable markings.

According to a fifth aspect, the invention provides a photocopier comprising: an optical scanner for scanning a document and producing output signals representing an image of the scanned document; an image processor for performing at least one processing step on the output signals produced by the scanner to produce modified signals representing a modified image of the scanned document; and, a printer responsive to the modified image signals for printing a modified image represented by the modified image signals; wherein the processing step performed by the processor comprises embedding a pattern of positional markings within the image of the scanned document which markings can be detected by a suitable detection system and used to distinguish between different positions on the documents.

The invention, therefore, in one aspect enables a photocopier to make digital documents whenever it makes a photocopy.

By adding a pattern of positional markings to the document when making a photocopy the apparatus enables a document to be photocopied as a "digital document". This permits the document to be used in any of a variety of digital paper systems depending on the pattern used, thus adding considerable value to the photocopy.

Where the apparatus is a photocopier it may include means for storing the copy information and the printed information on a server. This provides a record of the document. The printed information may be stored as an electronic image of the copied document.

It is envisaged that the copier may add a different pattern each time a copy is made of a particular document. In that case a single source document can be provided which can be passed through the photocopier many times to add additional information- represented by the pattern- which is different for each copy. Alternatively, the copier may be set up to add a different pattern each time a batch of copies are made, or perhaps add a pattern that is specific to a user. For example, a user may be required to enter an ID, password or other code on the photocopier which is unique to that user. Pattern can then be added which is unique to that user according to the ID, password or code entered.

The copier may access a server to determine which pattern to add. The server could reply to a request made by the copier across a network by sending the copier a portion of pattern or perhaps a pattern ID identifying the portion of pattern to be added. Optionally, the copier could send to the server an electronic image of the document which can be linked to the portion of pattern.

The server may therefore form a part of a "digital paper" processing system. In one aspect of the present invention, the document including the pattern will comprise a photocopy which includes the pattern. The original of the document need not be designed as a digital document, and may indeed have no indication that it is to be printed with a pattern. Once the copier has added the pattern and sent an electronic image of the original to the server to be stored in a related way with its pattern, it enters the digital domain. Information obtained by the pen as it writes on the document may be interpreted by the server to determine which document is written on and where. The recorded strokes may then be processed by a suitable application which handles the image of the document, the pattern and the strokes.

Where the photocopier detects that an original document to be/being photocopied already contains a pattern of positional markings, it may offer the user an option to print without pattern, with the original pattern or with the pattern replaced by a new pattern.

Optionally, the photocopier applies a pattern of markings which comprises a portion of pattern selected from a larger pattern space, the selected portion being dependent upon the identity of the photocopier.

Optionally, the photocopier is adapted to generate a different pattern for each copy that is made of a single source document, or a unique pattern for each copy it makes of any document.

Optionally, the photocopier includes a network connection that enables the photocopier to request pattern information from a remote device and receive the requested pattern information from the remote device, the processor embedding a pattern in accordance with the received pattern information.

Optionally, the photocopier is further adapted to transmit to the remote device an electronic copy of the scanned document.

According to a further aspect of the invention, there is provided a printing application which is arranged to receive a file defining a document to be printed and to produce a set of print instructions which comprise instructions that define the content of the document to be printed and at least one pattern instruction which when interpreted by a printer causes the printer to provide a position indication marking pattern on the printed document.

Optionally, the print instructions include at least one pattern instruction that comprises a pattern ID.

Optionally, the pattern instruction comprises a network address of a processor which can supply pattern to the printer.

Optionally, the pattern instructions include a plurality of pattern instructions which each indicate the location of at least one position identification marking in the document without indicating the appearance of the marking at each location, the instructions being provided in a language that can be interpreted by a printer.

Optionally, the application comprises a printer driver or a filter which receives a file containing program instructions defining a document from a document processing application and passes the instructions to a printer driver after having added the pattern instructions to the file.

Optionally, the application is adapted to generate a set of different patterns or portions of pattern and to produce a set of different copies of an original document by combining the content with one of the set of different patterns.

According to another aspect of the invention, there is provided a photocopier arranged to produce multiple copies of a source document comprising: an optical scanner for scanning a document and producing output signals representing an image of the scanned document; an image processor for performing at least one processing step on the output signals produced by the scanner to produce a set of modified signals representing a plurality of modified images of the scanned document, each modified image being unique with respect to the other images in the set; and a printer responsive to the modified image signals for printing a modified image represented by the modified image signals.

Optionally, the processing step performed by the processor comprises embedding a different pattern of positional markings within each modified image of the set which markings can be detected by a suitable detection system and used to distinguish different positions on the documents.

According to another aspect of the invention, there is provided a photocopier which is adapted to produce a plurality of different, modified documents, from an original source document by embedding identification information in each of the copies.

Optionally, the embedded information comprises one or more of: a pattern of positional markings; a bar code; a serial number; an identification marking.

According to a still further aspect the invention provides a controller for a photocopier and a data carrier which carries program instructions which when processed by a controller of a photocopier cause the controller to perform the method of the aspect of the invention or provide the apparatus of the aspect

BRIEF DESCRIPTION OF THE DRAWINGS

**Figure 1** shows a document printed according to one embodiment of the invention;

**Figure 2** shows in detail part of the document of Figure 1;

**Figure 3** shows a computer system arranged to process information from the form of Figure 1;

**Figure 4** shows a prior art pen for use with the document of Figure 1;

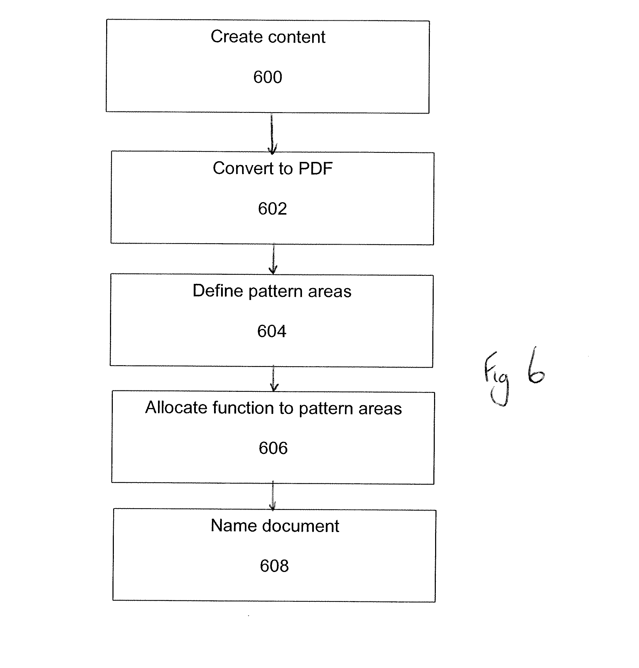

**Figure 5** shows an example of a system for creating and printing the document of Figure 1;

**Figure 6** is a flowchart of the steps followed in the creation of a suitable document for printing;

**Figure 7(a)** is a general overview of one exemplary embodiment of a printing system for the printing of documents in accordance with the present invention;

**Figure 7(b)** is an overview of an alternative exemplary embodiment of a printing system for the printing of documents in accordance with the present invention;

**Figure 8 (a)** illustrates in more detail the workflow for a first embodiment of a printing system in accordance with the invention;

**Figure 8 (b)** illustrates in more detail the workflow for a second embodiment of a printing system in accordance with the invention;

**Figure 8 (c)** illustrates in more detail the workflow for a third embodiment of a printing system in accordance with the invention; and

**Figure 8 (d)** illustrates in more detail the workflow for a fourth embodiment of a printing system in accordance with the invention.

**Figure 9(a)** is an overview of an embodiment of a photocopier in accordance with one aspect of the present invention;

**Figure 9(b)** is a schematic illustration of the photocopier controller;

**Figure 10** is a flow chart of the steps that are performed in producing a digital document using the copier of Figure 1 of the accompanying drawings;

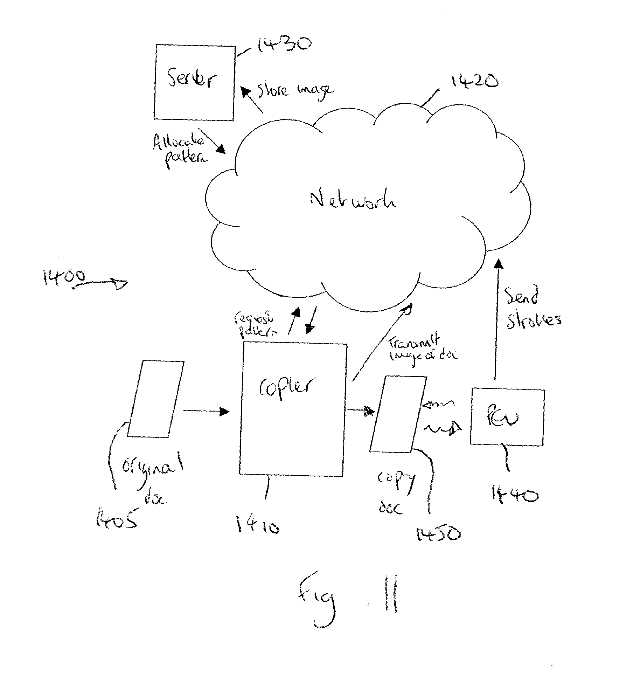

**Figure 11** is a schematic illustration of an apparatus for processing digital documents; and

**Figure 12** is a flowchart of the steps performed when using the apparatus of Figure 11 to manage copies of documents.

## DETAILED DESCRIPTION OF THE PREFERRED EMBODIMENTS

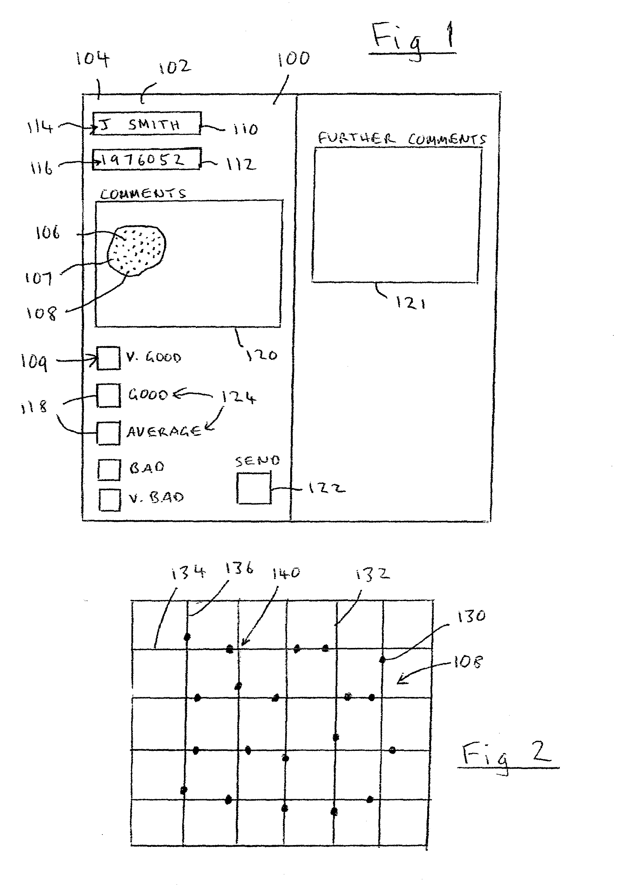

Referring to Figure 1 a printed "digital" document 100 for use in a digital pen and paper system comprises a carrier 102 in the form of a single sheet of A4 paper 104 with position identifying markings printed on some parts of it to form areas 107 of a position-identifying pattern 108. This background markings are referred to as "pattern" in this text. Also printed on the paper 104 are further markings 109 which are clearly visible to a human user of the form, and which make up the content of the document. The content 109 will obviously depend entirely on the intended use of the document. In this case an example of a very simple two-page questionnaire is shown, and the content includes a number of boxes 110, 112 which can be pre-printed with specific information such as the users name 114 and a document identification number 116.

In the past, the pattern has been printed in a first pass, typically using offset printing techniques with the content being printed over the top in a second pass or in a single pass using high cost offset printing. In this example, a method in which the content and pattern are printed in a single pass is described.

It is envisaged that the position-identifying pattern that is printed may have many forms but one suitable example is that shown in Figure 2. The position-identifying pattern printed on the document is made up of a number of dots 130 arranged on an imaginary grid 132. The grid 132 can be considered as being made up of horizontal and vertical lines 134, 136 defining a number of intersections 140 where they cross. One dot 130 is provided at each intersection 140, but slightly offset in one of four possible directions up, down, left or right, form the actual intersection. The dot offsets are arranged to vary in a systematic way so that any group of a sufficient number of dots 130, for example any group of 36 dots arranged in six by six square, will be unique within the pattern space. An example of this type of pattern is described in WO 01/26033. It will be appreciated that other position identifying patterns can equally be used. Some examples of other suitable patterns are described in WO 00/73983 and WO 01/71643.

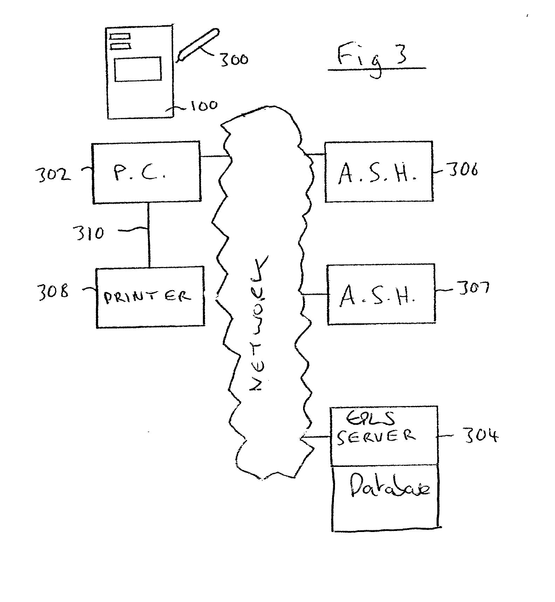

Referring to Figure 3 an internet based system for using the document 100 comprises a pen 300 arranged to write on the document 100 and to detect its position on the document from the pattern 108, and an internet connected personal computer (PC) 302 arranged to run an application for processing data from the pen 300, for example by modifying a file in which the document 100 is stored electronically in response to pen strokes made on the document 100 with the pen 300. The PC 302 includes a user interface including a screen 314, a keyboard 316 and a mouse 318, as well as a processor, a memory, and I/O software devices by means of which the processor communicates with the screen 314, the keyboard 316, the mouse 318 and a communications port by means of which it communicates with the internet. The system also includes an internet connected server 304 referred to here as an EPLS (electronic paper look-up service) which has stored on it database of records of which areas of the pattern space are allocated to which printed copies of documents.

An application service handler (ASH) 306, which is a program run, in this case, on a separate server having its own memory, processor I/O devices and communications port, is also provided with Internet connection. The ASH 306 is arranged to interpret the pen strokes recorded by the pen 300, as described below, converting them to an input suitable for the application on the PC 302. The ASH includes an optional image character recognition (ICR) program so that it can interpret handwritten input on the document 100 and convert it to digital text. A further ASH 307 is also provided, and is associated with a different application and arranged to interpret pen strokes for that application. In this case there is one ASH for each application that makes use of the digital pen and paper system. Each ASH 306, 307 needs to have a record of the layout of any particular document 100 including the positions, dimensions and functions of each of the patterned areas so that it can process any pen strokes made on the document 100.

A local paper lookup service (LPLS) 309 is also provided on the users PC which has an internet connection. This is a proxy service arranged to receive data from the pen when the pen has been used on the document 100, the data identifying which areas of pattern space have been written on. Typically the pattern space that is associated with the send box 122, and which the pen 300 has recognized as a prompt to contact the LPLS, is identified to the LPLS 309. The LPLS may be able to determine from locally held data which ASH to use to process the pen information. If not, the LPLS 309 is arranged to interrogate an Enterprise paper look-up service (EPLS) database on a central, network connected server 304 to determine the unique identity of the printed copy of the document 100. The EPLS includes a database indicating which application a printed copy of a document is associated with, and therefore which of the ASHs 306, 307 should be used for that application. The EPLS identifies the appropriate ASH 306 and the document identity to the pen. The pen can then send the pen stroke data and the document identity to the correct ASH 306, 307.

It will be understood that the various components of the system can all be located at separate locations, communicating via the internet as described. Alternatively some or all of them could be provided together on a single server, or grouped on a local network. This might be appropriate where a self-contained system for a limited number of applications is required.

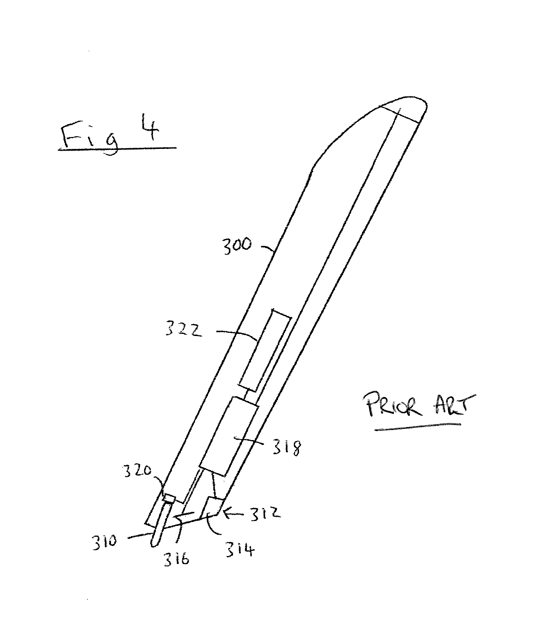

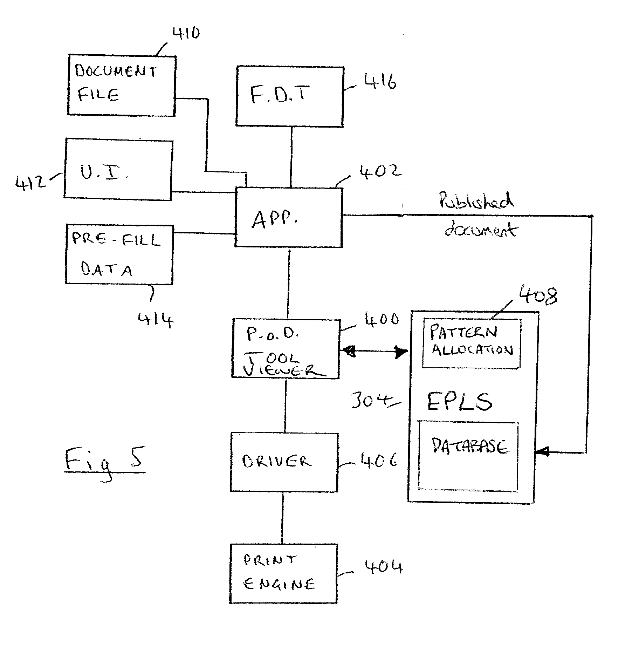

Referring to Figure 4, the pen 300 comprises a writing nib 310, and a camera 312 made up of an infra red (IR) LED 314 and an IR sensor 316. The camera 312 is arranged to image a circular area of diameter 3.3mm adjacent to the tip 311 of the pen nib 310. A processor 318 processes images from the camera 312 taken at a specified sample rate. A pressure sensor 320 detects when the nib 310 is in contact with the document 100 and triggers operation of the camera 312. Whenever the pen is being used on a patterned area of the document 100, the processor 318 can therefore determine from the pattern 108 the position of the nib of the pen whenever it is in contact with the document 100. From this it can determine the position and shape of any marks made on the patterned areas of the document 100. This information is stored in a memory 320 in the pen as it is being used.

When the user has finished marking the document, in this case when the questionnaire is completed, this is recorded in a document completion process, for example by making a mark with the pen in the send box 122. The pen is arranged to recognise the pattern in the send box 122 and determine from that pattern the identity of the document 100. It then sends this document identification information to the EPLS server 304, which identifies the relevant ASH 306 to the pen 300, by sending the network address (e.g. a URL) of the ASH 306 to the pen 300. The pen stroke data is then sent by the pen 300 to the ASH 306 which converts it to a suitable format for input to the application 402. The pen 300 can be connected to the network in any suitable manner, but in this case it is via a Bluetooth radio link with the PC 302. Suitable pens are available from Logitech under the trademark Logitech Io using a USB connection.

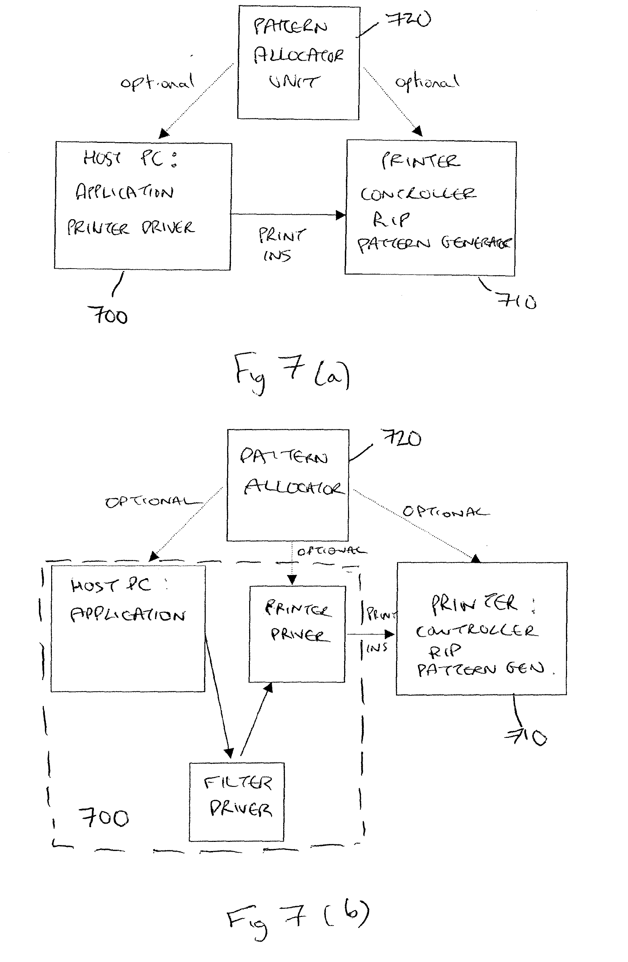

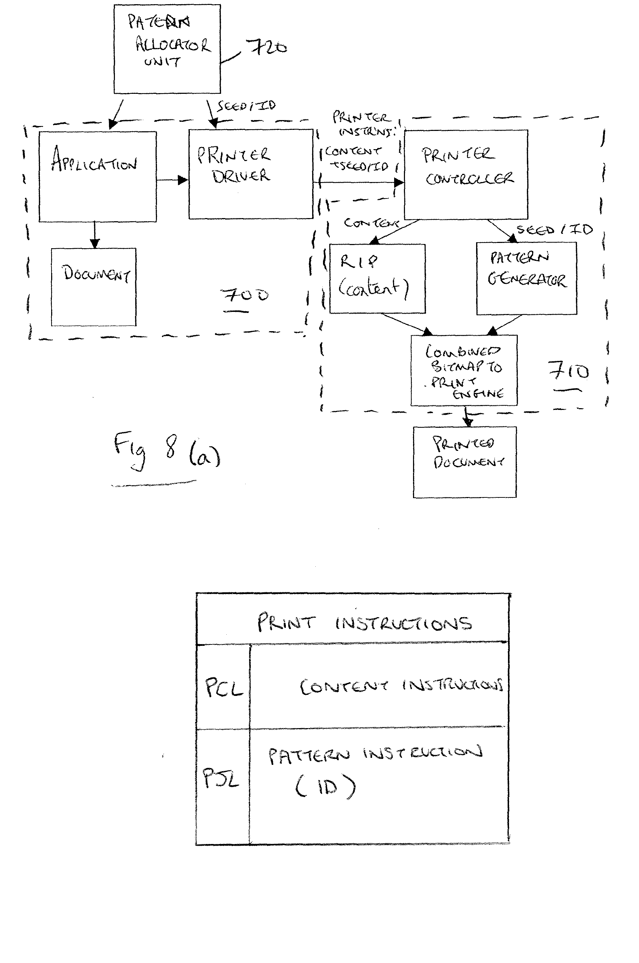

In order to produce a set of digital documents 100, the first step is the design and creation of the document content. Referring to Figure 6 this starts at step 600 with the design of the content of the document, which is carried out on the PC using the application 402 or some other application. In this case the application is Acrobat Writer and the PC 302 also runs a number of other applications including a word processing package such as 'Word' a database package such as 'Access', and a spreadsheet package such as 'Excel'. Each of these can be used to design the content of the document. Then the areas of the document to which the pattern 108 are to be applied are defined by the user. In this case this is carried out using a form design tool (FDT) 416 in the form of an Acrobat 5.0 plug-in. The content is therefore converted to PDF format at step 602, and the pattern areas defined using the FDT 416 at step 604, producing a digital document defining both the content and the positions and shapes of the pattern areas.

The user may also define functions associated with the various patterned areas defined at step 606 so that the application 402 can process data received back when the document 100 has been written on. The defined functions are then allocated to the pattern areas at Step 606. In the case of the questionnaire document 100 the pattern areas in the larger boxes 120, 121 are identified as a graphical input areas, for which any pen markings should be stored graphically, or perhaps analysed using character recognition and stored as text. The regions associated with the check boxes 118 is associated with the respective response options so that the checking of the boxes 118 on a number of the forms 100 produces a standard mark, such as a cross, in the check box of the stored document. The region associated with the send box 122 is associated with the send function which will cause the pen to stop recording pen strokes for the document 100 and send them to the LPLS 309.

Once the document 100 has been designed, the user indicates, using the FDT 416 that it is completed, and the FDT 416 saves the document as a PDF file and allocates a document name to the document 100 in step 610 as indicated above. The FDT 416 also creates a Paper Application Definition (PAD) file which is a file defining those features or parameters of the document 100 that will be needed by the ASH 306 to interpret pen strokes made on the document 100. Those parameters include the size and shape of the pattern areas, and their functions, such as whether they are check boxes, areas for graphical input, areas for ICR analysis or areas having other functions. These parameters are the ones necessary to allow the processing of pen strokes made on the document 100 using the pen 300.

The PAD file is transmitted to the EPLS 306 when the document 100 has been finished and before it is written on with the pen. There it is added to the database to be updated or linked to pattern portions once pattern has been allocated at print time, so that it is accessible to the ASH which can interpret pen strokes on the document 100 and produce the necessary inputs to the application 402. The pattern space area allocated to the send box 122 also needs to be identified to the pen 300 so that it can detect when it is written on and respond by sending the pen stroke data. This occurs after the form design and is explained in more detail in the following description.

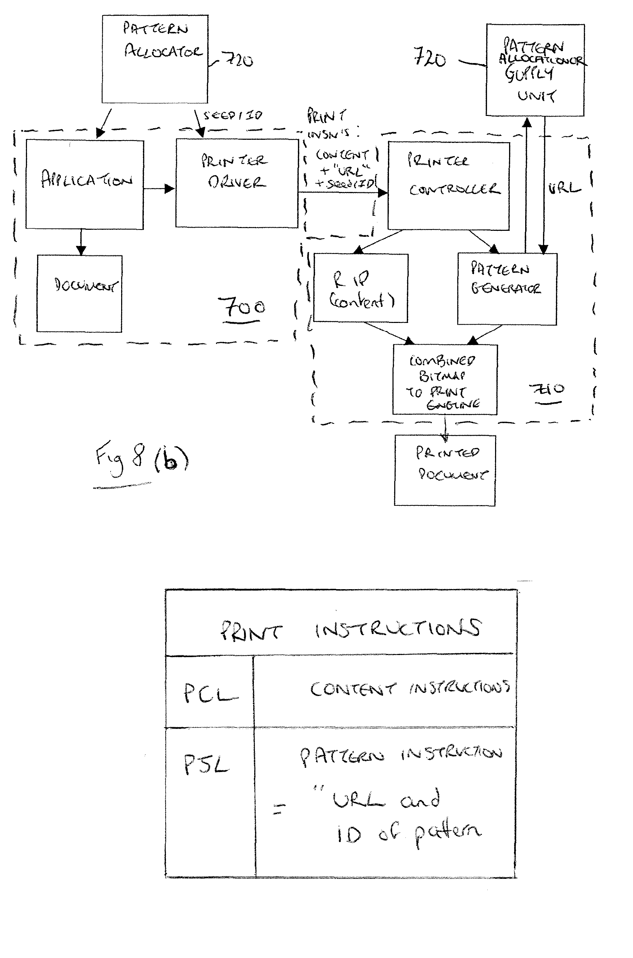

Having defined a document and defined the regions within that document to which pattern is to be allocated the user is ready to print the document. The printing of the document- comprising the content and the pattern is achieved in a single pass process using any printer that has a sufficient resolution to produce the dots of the pattern. Figure 7(a) shows an overview of the functional units of a suitable printing system according to an embodiment of the present invention, which in this example comprises a computer 700 that the document is stored on prior to printing and a printer 710 which is connected to the computer. The computer provides an application for viewing and/or editing the document to be printed (for example Acrobat Reader) and a printer driver application which produces a set of print instructions. The printer includes a print controller which receives the print instructions from the printer driver and in turn prints the document. Optionally, the system includes a pattern allocation unit 720 which stores pattern information.

When a user decides to print a document, print on demand (POD) tool is called up from the application. In a typical graphical user interface, such as Microsoft Windows, running a word processing package to design a form, such as Word 6.0, calling the printer driver is performed by selecting "file" then click "print" in the drop down box that appears below. This will start the printer driver which will initiate the display of a set of visual prompts on the screen to which the user can respond. These prompts may include the option to print the document with or without pattern.

Once the user has responded to the prompts called, the POD takes the file- a PDF file in this example- produced by the application sends a stream of print instructions to the printer driver which in turn creates from these a print file in a page description language (PDL) describing the arrangement of any text and graphics forming the content in the document. Many different PDL languages could be used such as PCL developed by Hewlett Packard or Postscript developed by Adobe Systems.

The printer driver may produce a set of PDL instructions defining the content which also include one or more pattern instructions. Alternatively, the driver may produce a set of PDL instructions for the content which are accompanied- or "wrapped up" by instructions written in a higher level language which include pattern instructions. How this is done depends on the languages understood by the printer. The format of the PDL part of the file will depend upon the type of printer to which the file is to be sent but will most likely be either as a PCL or Postscript format file.

In one arrangement, for example, the content may be written in the PCL language and the pattern instruction(s) may comprise commands written in the printer job language (PJL) such as that described in the PJL Technical Manual, 10th edition that can be obtained from Hewlett Packard and is suitable for the control of many HP printers. In the event that the instructions are sent to a printer that does not support PJL, the pattern commands in the PJL part of the file will print as ASCII characters and the document will be printed without pattern. This feature may be beneficial with older printers that are not capable of printing the pattern as the document content will still print.

The printer can read the PJL file as it is provided with a converter-sometimes called a raster image processor (RIP)- which understands the PJL language. The raster image processor is essentially a dedicated processor built into the printer architecture, which converts the instructions sent by the printer driver into a full-page bitmap.

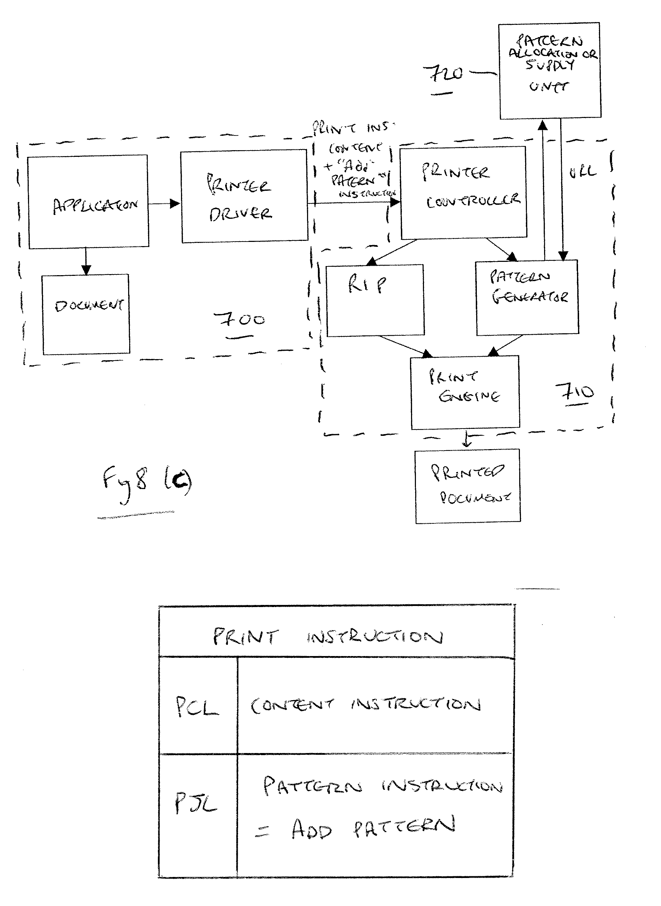

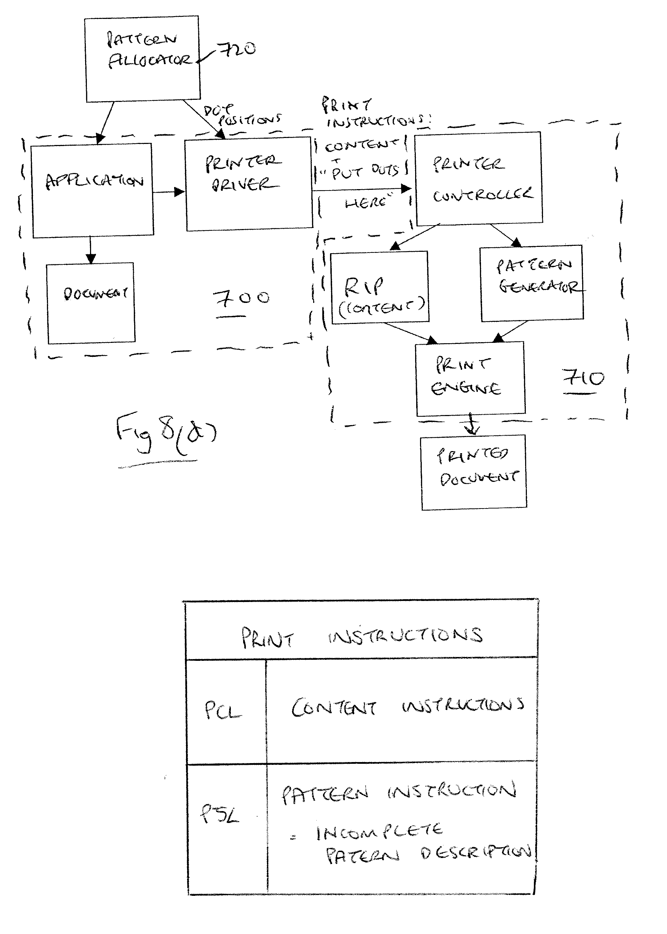

Figure 8(a) of the accompanying drawings illustrates in more detail the work flow of a first embodiment of a printing system starting at the left edge of the page with the FDT application which views the document and ending towards the right edge of the page with the print engine which outputs the printed document.

In this embodiment the print instructions sent to the printer are prepared at the printer driver of the host PC 700 and include at the start of the file a new PJL command which provides a metadescription of the pattern. This command is in the form of a pattern ID which identifies that a pattern is to be included in the document. Assuming the document produced by the FDT contains regions which are defined as including pattern, the driver allocates pattern to these regions and identifies the portion of pattern allocated by a pattern ID which is included in the file sent to the printer. Pattern allocation is performed by the printer driver making a request to a pattern allocation unit (as also shown in Figure 3) which forms part of the EPLS server although it could be held elsewhere. The PAD file is updated or linked at the EPLS with the allocated pattern information.

An example of a suitable pattern instruction written in PJL is as follows:

@PJL SET DIGITAL-PATTERN = " string"

Where @PJL tells the printer it is a PJL command, DIGITAL-PATTERN tells the printer to call the function for creating the digital pattern and the string is the pattern information passed to the function.

The printer, which as described understands the PJL language of the print file has access to a memory in which is stored an algorithm of the generation of pattern. The new DIGITAL-PATTERN command for the pattern ID is also added to the print engines vocabulary. The RIP parses the instruction file by reading the instructions and calling the appropriate functions defined by the instructions. For example, when a PJL command identifying a pattern ID is read in the instructions the RIP calls a function that executes an algorithm using the value of the ID as its input variable. The function produces a bitmap file corresponding to the required image.

The pattern produced by the DIGITAL_PATTERN function depends on the values held in the string. The values passed by the command will depend on the way in which the function is defined at the printer, but typical string syntax in PJL may be as follows:

[PAGE_NUMBER:PATTERN-ID[(X,Y,W,H):PATTERN-ID[(X,Y,W,H)]]

where PAGE_NO is the number of the page in the document;

PATTERN-ID is the unique ID of the pattern which can be in the form of co-ordinates as here;

X,Y,W,H are the position and size of the portion of pattern in the pattern space that is to be printed.

In the above example, the command passes to the printer the location in x-y coordinates of an area of pattern within the total pattern space, as well as the width and height of the area.

Of course, other pattern information could be passed in this way. For example, the string may be an ID which when passed to the function called by the DIGITAL_PATTERN command causes the function to generate the required pattern. In a modification of this approach, the ID may be combined with a unique ID stored at the printer to produce an ID which is unique to the combination of document and printer.

This will make it possible to identify which printer a document was printed on.

The use of the command allows other functionality to be included. If multiple pages are present in the document the command can be called with a string that corresponds to each page, a : being used as a separator in the PJL language.

For example, if the document is a form that is 5 pages long and only pages 2 and 3 have pattern the command may look like:

@PJL SET DIGITAL-PATTERN="2:1233333,890 3: 2344444,901"

where 1233333,890 and 2344444,901 are the co-ordinates of the pattern portion for pages 2 and 3 respectively.

Similarly, the command can be used to tell the printer which regions of a page are to be printed with pattern and which are to be blank. It will be appreciated that this can be readily achieved by writing a suitable function that can be called by the printer.

Once the content and the pattern have been parsed by the RIP to produce bitmap images in the device space these are next combined using a logical bit wise OR function to form a complete pattern/content image in the device space using the canvas directly for rendering. This defines the whole document as a single file. At this time, the document will contain the pattern that corresponds with the pattern that is allocated to it.

In a final stage, the file comprising the combined content and pattern is sent to a printer engine where the bits of the image are converted to ink (or toner) dots. The file is therefore converted into low level machine instructions for the control of the printer hardware to print the patter, e.g. instruction that move parts of the printer and tell is when to feed the paper or deposit ink or toner or the like. This part of the process is standard printer technology as the combined pattern and content image will appear to the hardware and software as any other document that was to be printed by this stage.

It is to be noted that when a pattern ID is passed to the printer, the pattern is allocated by the pattern allocation unit prior to printing-typically by the POD tool calling a pattern allocation module which returns with the identity of an appropriate pattern or by the printer driver itself. Generation of the allocated pattern takes place at the printer.

An alternative flow path for a second embodiment of a printing system is shown in Figure 8(b) of the accompanying drawings. Initial production or viewing of a document using an application is performed in the same manner as the for the first embodiment, as it the calling of the printer driver when it desired to print out the document.

The primary difference, however, is that in this arrangement the printer does not necessarily receive a file containing a pattern ID for production of a pattern but instead receives a network address indicting the location of a server which acts as a pattern supply unit. The printer engine, on reading the network address in the file contacts the EPLS server identified by the network address and makes a request for a suitable pattern from the pattern allocation unit. The EPLS server returns either a pattern ID, or sends a file in a vector or a bitmap format of the pattern. As such pattern allocation takes place at the printer and typically has not taken place until after the instructions have been sent to the printer.

The pattern received from the pattern supply unit by the printer is then combined with the content as for the first embodiment and low level machine language instructions are generated for the printer hardware as before.

As with the first embodiment shown in Figure 8(a), this provides the advantage that the processing overheads of allocating pattern and producing the actual pattern instructions are passed to the printer rather than the processor running the application. The size of the file of print instructions is greatly reduced.

Of course, it will be appreciated that whilst in the first and second embodiment the insertion of the pattern ID or network address into the document file is made by the application itself when a document file is produced it could equally well be inserted by the printer driver. A suitable plug-in, for example, to an existing application may be provided, or it may be written into the application from the outset. In either case, the PAD file can be updated at the time of selecting the pattern to include the pattern, or may be linked to the appropriate pattern once it has been allocated.

In another alternative, shown in Figure 8(c) neither the print application nor the POD tool or driver need to allocate any pattern. The definition of a document by an application could simply say "this needs some pattern here" and the printer driver may see this as a prompt to add a prompt to "add pattern here" or a network address to the print instruction set. The actual pattern may then be allocated to the document by a pattern supply and/or allocation unit such as the EPLS server identified by the network address at the request of the printer. The EPLS is notified of the pattern allocated to the printed document and associates this with the PAD file produced during the design of the document.

Also, it is to be understood that a pattern ID could be included in the print instructions together with a network address, the printer passing the pattern ID to the processor identified by the network address and receiving a corresponding portion of pattern associated.

The flow path of a still further alternative print system for creating and printing a document with pattern is shown in Figure 8(d) of the accompanying drawings. In this arrangement, the printer is sent instructions on where to print the markings that form the pattern - a set of "put dots here" commands are sent, but the printer is left to decide for itself what the markings should look like and how to create them. As such, pattern allocation AND generation are actually performed at the host rather than the printer. The advantage of reduced instruction set size of the first embodiment are still achieved, as well as the advantage of increased accuracy in the production of the printed pattern.

In this case, the instructions sent to the printer still comprise PCL instructions wrapped with some PJL commands. Of course, as already stated this is only by way of example and any other suitable printer languages which permit the printer to call up appropriate functions could be used. At the start of the file a set of PJL commands are inserted which each provide a meta description of the location of one or more of the markings of the pattern. By meta description we mean data about other data- in this case data identifying the position of a marking in a document and the type of marking. These commands are each in the form of a command (which tells the RIP it is a position marking) followed by an alphanumeric/numeric variable or string which defines the location of a position marking in the document.

The location of each marking is determined prior to or during the creation of the print instruction set by the POD tool. The tool allocates a unique instance ID to the printed document 100. It then requests the required amount of pattern space from the pattern allocation unit (which could in some embodiments be the server 304), in this case one page, providing the document name and instance ID to the server 304, and receives back a definition of the required pattern space. This can be, for example, as a full definition of the actual pattern to be used, such as a bit map. The POD tool then generates a set of pattern instructions indicating the location of each of the dots that make up the pattern and adds these to the content instructions to be sent to the printer. Of course, the server could return to the POD with an appropriate set of command instructions rather than sending back an image such as a bitmap.

Alternatively, the POD tool may support an algorithm which produces the pattern locally without needing to access the server. This pattern generation may be performed by any application at the host, but is most likely to be performed by the POD tool printer driver at the time of printing.

The printer, which as described understands the PJL language of the print file has access to a memory in which is stored a function that is called whenever a PJL command for a position marking is encountered. The function is called by the command which operates on the string or variable sent with the command. The command returns a portion of bitmap for a dot at the requested location. In this way, the RIP parses the instruction file by reading the instructions and calling the appropriate functions defined by the instructions.

The command string could correspond to more than one pattern dot, such that each time the function is called a portion of bitmap corresponding to a number of dots is created. This allows further compression of the instructions sent to the printer. For example, for the pattern of Figure 2 a variable comprising a two bit number may be sent indicating whether a marking is above, below, left or right of a grid intersection. A string of such two-bit numbers can be used to identify the location of a group of dots.

The bitmap produced by the function is inserted into the final bitmap for the document. The exact position at which a marking is to be printed on the document is indicated by the print instructions corresponding to a pattern instruction.

Once the content and the pattern are produced as bitmap images these are next combined, perhaps using a bitwise OR function, to complete pattern/content image. This defines the whole document as a bitmap file or as a set of PDF instructions (vectors etc) used by the printer to produce the final bitmap.

In a final stage, the bitmap file comprising the combined content and pattern is sent to a printer engine where the bits of the image are converted to ink (or toner) dots. The file is therefore converted into low level machine instructions for the control of the printer hardware to print the patter, e.g. instruction that move parts of the printer and tell is when to feed the paper or deposit ink or toner or the like. This part of the process is standard printer technology as the combined pattern and content image will appear to the hardware and software as any other document that was to be printed by this stage.

In some cases, the printer may store a function which corresponds to more than one type of position marking. In this case, the printer may select whichever marking is best to produce the required pattern taking into consideration the resolution of the printer.

By way of the example shown in Figure 8(d) it should be understood that we may send to the printer an incomplete pattern description which requires the printer to add further detail- such as how to print a pattern marking- to create the pattern. The file sent to the printer may therefore contain a meta description which comprises a compressed representation of the pattern. It may be in the form of a sequence of position instructions identifying where to place a set of dots on the document to form the pattern. In the example of Figure 2, this may be a sequence identifying the location of the dots around the imaginary grid, e.g. left, up, up, right, left etc. Of course, it may also be in some other form which provides only a partial definition of a pattern.

It will be appreciated that many modifications are possible within the scope of the invention. Any features of one of the embodiments of Figures 8(a) to (d) may be combined with the features of one or more other of the embodiments. The pattern allocation unit may be accessed by the application, the printer driver or the printer depending on the preferred arrangement for a given application.

A filter driver may be provided which sits in the flow path between the application and the printer driver. This can be seen in Figure 7(b) of the accompanying drawings. As far as the application is concerned this filter will appear to be a printer driver, and will be called in the same way. As far as the printer driver is concerned it will look like an application and will pass instructions to the printer driver in the same way that an application would. The filter drivers function would be to add an appropriate pattern ID or network address or other pattern instructions to the print file as it passes from the application to the printer driver.

It will also be understood that the paper printed with the pattern and the content can have many uses. A primary use may be in a system for the creation and management of digital documents.

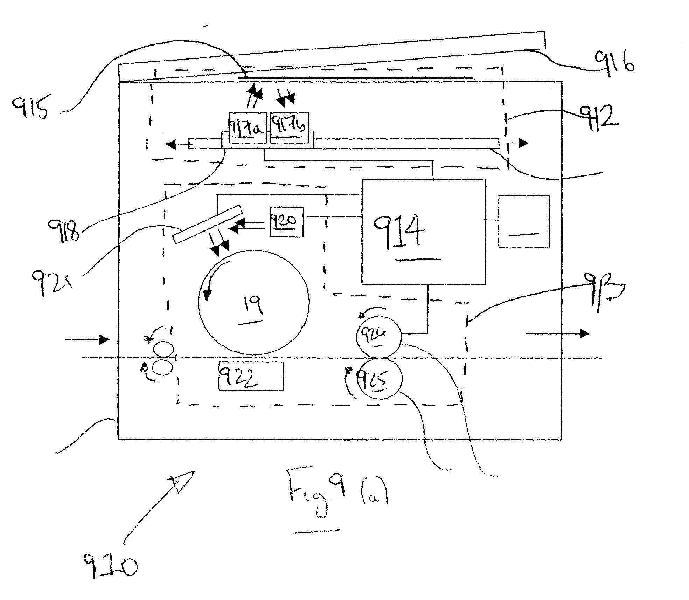

Another example of a device which falls within scope of at least one aspect of the present invention is a photocopier 910 which can produce digital paper copies of an original source document. This device incorporates many of the benefits of the printers of the first examples, and is shown in Figure 9(a) of the accompanying drawings. It comprises a single piece of apparatus which includes within its main housing a scanner 912 providing an image receiving device and a printer 913 providing an image recording device. These two devices are controlled by a controller 914. The scanner 912 and the printer 913 of the photocopier 910 are essentially standard hardware in the photocopier art and as such will only be explained in brief detail- the skilled man will readily appreciate how these two parts are to be implemented.

The scanner 912 comprises a glass platen 915 upon which a source document to be photocopied can be placed. The source document could be a printed page, perhaps A4 or A5 or a handwritten document or page from a book leaflet or pamphlet. Indeed, it could be anything that can be reproduced using a photocopier. A cover plate 916 is provided above the platen 915 to block out any unwanted light, and the document is placed between the platen and the cover plate. An optical imaging system comprising a detector-typically a charge coupled device (CCD) line image sensor 917a and a lamp 917b mounted on a motor driven platform 918 are provided below the glass platen 915. The motor driven platform 918 moves the CCD and light across the platen under the control of the controller 914 such that the CCD captures a sequence of images, each comprising a slice of the complete image of the document on the platen 915. The CCD of the optical scanner generates as its output electrical signals that digitally represent an image of the document that it has scanned optically. These signals are collated and fed to the controller 914 to form a digital image of the scanned document.

The digital image may be gray-scale or colour depending principally upon whether the copier has the ability to print colour copies.

The printer 913 is typically, but not necessarily, a laser printer. The printer 913 receives electrical signals from the controller digitally representing a modified image of the document and renders this modified image on a copy document. As shown in Figure 9(a) the printer 913 comprises a photoconductive drum 919 and a light exposure apparatus which is adapted to expose the drum to light. The exposure apparatus comprises a laser diode (LD) 920 and a polygonal mirror 921 which is driven by a motor (not shown). As the drum 919 rotates under the control of the controller 914 the polygonal mirror 921 is also rotated to scan a beam of light from the LD 920 across the drum 919. This charges areas of the drum 919 which then attract toner from a toner supply 922. The toner forms the modified image on the drum 919. A transport mechanism is provided adjacent the drum 919 to move paper 923 from a feeder unit (not shown) past the drum 919, drawing the paper 923 along as the drum 919 rotates. The modified image formed in toner on the drum 919 is thereby passed onto the paper 923. The transport mechanism then carries the paper 923 to a fixing unit 924,925 which comprises a heated roller 24 and a press roller 925. The paper 923 is pressed between these two rollers 924,925 where the modified image is fused to the paper by the heat of the heated roller 924.

The scanning unit 912 and the printer 913- and indeed all the motors and other parts of the photocopier are controlled by signals produced by the print controller 914. The controller 914 also receives input signals from parts of the photocopier 910 such as a copy button (not shown). The output of the CCD 917b is passed to the controller which produces an initial scanned image. The controller 914 modifies the scanned image by generating a pattern of positional identification markings and modifies the initial image in the digital domain by adding the pattern. The modified image including the pattern is then used to drive the sequence of illumination of the LD which determines the final image that is printed.

A suitable print controller 1200 is shown in more detail in Figure 9(b) of the accompanying drawings. It may perform a number of operations, such as colour correction or scaling of the image, and, in accordance with the present invention, embedding a pattern of positional markings.

The print controller 1200 comprises a processor 1210 which is operably connected via a system bus to an area of permanent memory 1220, an area of random access memory 1230, a power supply line 1240 and a modem 1250. The permanent memory 1220 provides the function of a data carrier and stores therein a set of program instructions 1260 which can be executed by the processor 1210. The operating instructions control the operation of the photocopier controller, and the processor 1210 carries out the instructions in accordance with the program, taking additional input from user performed operations such as the activation of a "start copy" key or an "add pattern" key connected to the bus.

The program 1260 comprises several functional blocks of program code. One block 1261 when executed by the processor causes the scanner to capture an input image of a source document upon initiation of the "start copy" key by a user. The captured image 1231 is stored by the processor 1210 in an area of the temporary RAM. Another block 1262 causes the processor to generate a pattern of positional markings. A further block 1263 causes the processor to modify the captured image to add the positional markings. A still further block 1264 contains the instructions needed to cause the processor to instruct the printer to print the modified document. A final block 1265 causes the photocopier to instruct the modem send an image of the scanned document to a remote server, typically as a bitmap or perhaps a compressed image in a format such as Postscript or PCL.

The controller in effect modifies the scanned image to produce a modified image to be printed. In this example the modification comprises the addition of a pattern of positional markings.

It is advantageous not only that the pattern applied is unique for a document- or each of a set of copies- but that it also encodes some additional information such as the photocopier identity. This can be achieved by reserving an area of pattern for a particular copier by giving the copier its own ID or perhaps by storing along with the pattern used and the image of the document some information such as the copier identity, time of copier, user ID etc. This information could be stored in a separate file attached to the document image sent to the server.

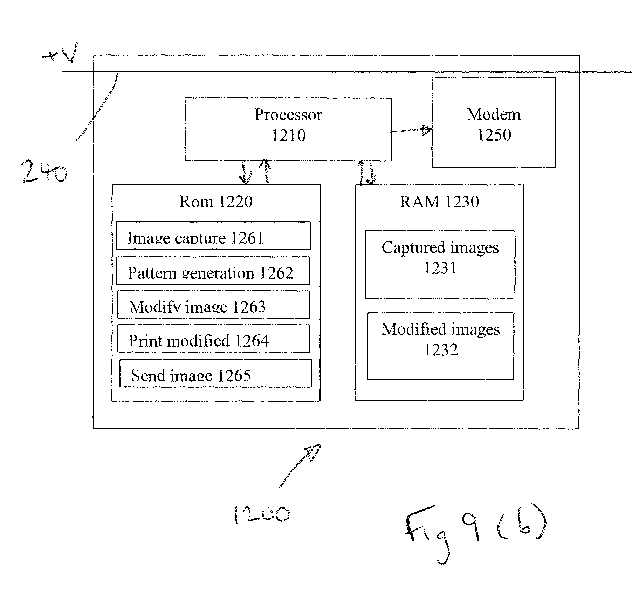

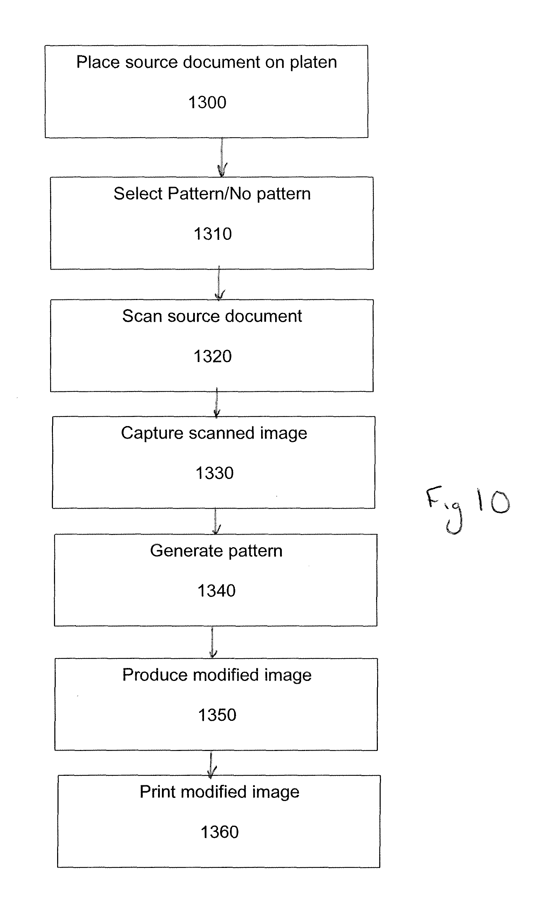

The operation of the copier of Figure 9(a) is set out in the flowchart of Figure 10 of the accompanying drawings.

In a first step 1300, a document to be copied is selected and placed on the platen of the photocopier. The user then selects 1310 whether or not to produce a "digital" photocopy (modified by the photocopy controller) or a normal copy by pressing the "digital copy" button. This sends an appropriate signal to the photocopier controller. Once selected, copying begins by pressing the "Start" button. For ease of explanation it will be assumed that the user has requested a "digital" copy. It will be understood also that some photocopiers may not provide the user with a choice but may in fact generate all copies as "digital" copies.

After the Start button has been pressed, the scanner is initiated 1320 and the lamp and CCD are moved across the platen such that the CCD captures 1330 an image of the document. This image is passed to the controller which allocates or requests allocation of pattern from a server to the document and then generates 1340 a pattern of positional markings to apply to the captured image according to the pattern that is allocated. The controller will in fact render a number of different patterns depending on how many copies the user has requested- 5 patterns may be generated for 5 unique copies, or 1 for each of 5 copies. This will depend on the settings of the photocopier which may be user definable.

Once the patterns have been produced the controller produces 1350 a set of modified images. Each will comprise the scanned image of the source document embedded with the pattern. The pattern could be embedded using a simple logical OR operation if the scanned image and pattern are rendered in the same format and resolution. Where the printer is a laser printer the scanned image and pattern could be generated in any language which can be interpreted by the printer, such as PCL or Postscript, or could be any other form of bitmap or vector images.

The step of generating or creating 1350 the pattern can be performed in a number of different ways. The following is a non-exhaustive list of possible alternative processes:

- By randomly generating a pattern ID as a numerical seed and applying it to an algorithm that generates a pattern in the device space of the printer. This can be achieved if the controller pattern generation block 1262 comprises a program, such as a JavaScript applet which is called by the controller.

- By generating a pattern ID and accessing the pattern from a library stored in the memory 1260. This requires a large library of pattern, already created in the printer device space to be stored, or perhaps stored in a form of shorthand to reduce the amount of memory needed. For a very large pattern space it is envisaged that this may prove impractical and the first alternative would be preferred.

- By requesting a pattern from a remote server using the modem 1250 or other network connection. Either an area of pattern rendered in the printer device space may be requested, or just a pattern ID that can be processed using the first alternative.

It could, of course perform a combination of these functions. For instance, rather than returning a pattern to the copier a server may instead return a pattern ID to the photocopier which in turn creates the required pattern.

In the case of a photocopier which is linked to a remote server using a modem or other network connection the controller may only have the ability to request and receive pattern. The choice of which pattern to use will be left to the server. The selection of a pattern could be based on a number of requirements. For instance the photocopier may identify itself to the server and this may influence the choice of pattern portion used.

In a final step, the controller prints 1360 the modified images.

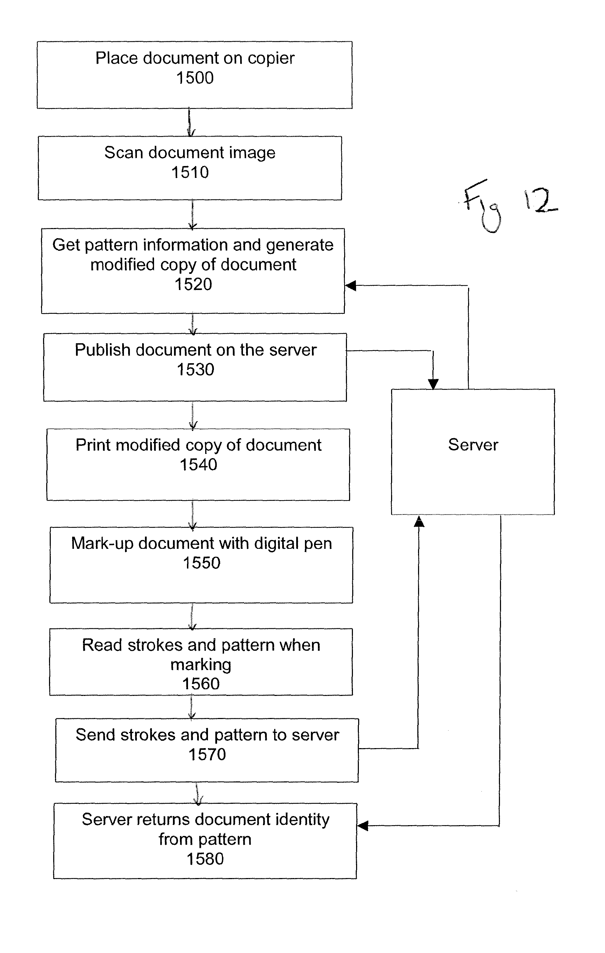

The photocopier may be used in a variety of different "digital" paper document systems although one most advantageous system is illustrated in Figure 12 of the accompanying drawings.

The system 1400 comprises a photocopier 1410 such as the photocopier 910 shown in Figure 9(a) that is arranged to add a pattern of positional markings at print time. This is connected across a network 1420 to a server 1430 where an image of the scanned document is stored along with the pattern allocated to a photocopy of the scanned document. A pen 1440 is also provided which can be used to write on the photocopied document. The pen 1440 is provided with a camera (not shown) which detects the positional information on the digital photocopy 1450 of an original paper document 1405 as it writes and is also connected across the network to the server. The server 1430 interprets the pen output to recognise the document from the positional markings. By selecting an appropriate pattern and cross-referencing this with the scanned image on he server the system can therefore tell what is written and where on a copy. Provided that each copy is given a unique pattern and the pen has a unique ID which is contained in the information sent across the network it is possible to tell who writes and which copy.

Digital documents produced by the photocopier can be processed in many ways. It is envisaged that an application can be provided which merges the stored image of the scanned document with markings made upon it by a digital pen and displays the merged image on a screen. A user can then make manuscript markings on a digital photocopy and easily transfer them to a computer screen. In an alternative an application may be provided which simply identifies a copy from its pattern whenever a user writes on it with a digital pen. This could be used for document tracking or to check for unauthorised use of a photocopy. It could be used in combination with digital rights management systems.

The server on which the pattern information and copy of the scanned image are stored need not be one and the same. For instance, the photocopier may store the images in its own memory or on a dedicated storage device connected to it across the network whilst the pattern information is stored on a separate server. When a pen writes on a photocopy the server is contacted which tells the pen the address on the network at which the corresponding copy is stored. This server could, for example comprise a central server on which all pattern allocated by photocopiers is stored along with a network address indicating which other server or storage device holds the image of the document along with an application suitable for handling the pen strokes. The central server contacted by the pen, on receiving the pen strokes and recognising the pattern, will then return the network address of the other server to the pen which thereafter only talks to the other server. This would be more suited to use on a wider scale whereas the first embodiment would be suitable for use within a single company which has its own pens, photocopier and server.

The operation of a digital paper system based around a photocopier such as the one shown in Figure 9(a) is illustrated in Figure 12 which provides a flowchart of a use of the system to manage copies of documents.

In a first step 1500, the user starts making a copy of the document by placing it on the photocopier. The photocopier then scans 1510 the document and produces 1520 a digital photocopy by performing the steps of Figure 10 of the accompanying drawing. In the next step 1530 the scanned image and the pattern associated with the modified image- or something identifying the pattern- are sent to a remote server and the modified document is printed 1540. If more than one copy was requested then all copies would be printed at this stage.

Once printed, a user can write 1550 on the document with a digital pen which captures 1560 the users pen strokes and the pattern on the document. The pen sends 1570 this information to a server which stores the pattern read by the pen. The server interprets 1580 the pattern and returns to the pen the identity of the document that is being written upon.

The provision of a pattern of positional markings- such as the Anoto pattern makes it possible to record, using an appropriate digital pen-the position of writing on the paper. The unique pattern read by the pen is sent to a server. The server knows where it is in the pattern space and can look up to tell not only what document is being written on but also where in the document.

In an alternative arrangement the photocopier may be arranged to produce multiple different copies of a source document in which each copy is different and in which a copy of the source document is stored along with its modification to permit the identity of the copy to be determined. This feature can be provided by a copier which does not necessarily apply positional marking patterns but instead modifies a set of copies in other ways. For example, a serial number or barcode or other identification pattern could be applied. Since an electronic copy of the source document is stored on a server or other apparatus, or even the copier itself, the copy can be identified by analysing the content of the copy. A barcode reader could be used where the marking is a barcode, or a pen type device or other scanner could be used.

Whilst it is known in the prior art to provide photocopiers which modify scanned images to embed information the applicant is not aware of any photocopiers which modify each of a set of copies in a print batch in such a way that each is unique.

It will also be understood by the skilled person that we may provide a printer, such as the printer shown in the accompanying drawings, with the functionality described hereinbefore for the photocopier in which case the original will be an electronic file rather than a paper document. As with the photocopier described hereinbefore the printer will modify each copy it makes by applying a different marking so they can be distinguished from one another. Recording the original together with the identity of the marking for each copy allows them to be easily tracked. If a pattern of positional markings is used as the marking it also allows the printer to generate a "digital" document even where the original is not designed as a "digital" document.

**Claims**

1. A method of printing a document containing a printed pattern of position identification pattern markings comprising:

   providing to a printer a set of print instructions which define the content of a document;
   generating at the printer a pattern using pattern information that is independent from the print instructions; and,
   printing a document that comprises both the content and the pattern.

2. The method of claim 1 in which the print instructions include at least one pattern instruction indicating that a pattern is to be added by the printer to the document and the printer adds a pattern to the printed document in response to the at least one pattern instruction.

3. The method of claim 2 in which the pattern instruction comprises a pattern ID and in which the step of generating the pattern at the printer comprises adding a portion of pattern identified by the ID.

4. The method of claim 2 in which the pattern instruction comprises an address or an instruction corresponding to an address, and the step of generating the pattern comprises causing the printer to request an appropriate pattern from a server having a network address identified by the pattern instruction.

5. The method of any preceding claim in which the pattern is allocated to the document at the printer after initiating the transmission of the document instructions to the printer.

6. The method of claim 1 in which a pattern is allocated to the document prior to sending the document to the printer and in which the instructions sent to the printer include a plurality of pattern instructions, each one indicating the location of a pattern marking on the document and in which the printer generates the pattern to be printed by creating the appropriate position indication marking for each location.

7. The method of claim 6 in which the printer includes a look-up table or library in a memory which stores instructions which tell the printer how to produce a position identification marking for use in creating the pattern.

8. The method of claim 6 or claim 7 in which the printer includes a raster image processor which receives the print instruction set and is adapted to retrieve a bitmap corresponding to each position indication marking identified by a pattern instruction contained in the print instructions from the library.

9. The method of any one of claims 6, 7 or 8 in which the pattern comprises multiple instances of a single position identification marking provided at locations offset from the intersections of a virtual grid across a portion of the document, and in which the pattern instructions identify the position of each marking relative to the grid.

10. The method of any one of claims 1 to 9 in which the printer includes a look-up table in a memory which stores a pattern which is sufficient to cover and area larger than the area of a document to be printed and in which the pattern instruction identifies the location of a portion of the stored pattern to be printed on the document.

11. The method of any preceding claim in which the printer is arranged to add a different pattern to each copy of a document that it prints from a set of print instructions.

12. Apparatus for printing a document containing position identification pattern markings, the apparatus including a printer having an interpreting means arranged to create the pattern to be printed in response to receipt of a set of print instructions, the print instructions defining the content of the document using pattern information that is separate from the print instructions.

13. A printer for printing a document which includes a pattern of position identification markings which includes:

   means for receiving a print file containing a set of print instructions for the printing of a document, and means for creating the required pattern in response to at least one pattern instruction contained in the print file using pattern information that is obtained independently from the print file.

**14.** A printing application which is arranged to receive a file defining a document to be printed and to produce a set of print instructions which comprise instructions that define the content of the document to be printed and at least one pattern instruction which when interpreted by a printer causes the printer to provide a position indication marking pattern on the printed document.

**15.** Apparatus arranged to produce multiple copies of a source document comprising:

receiving means for receiving a set of print instructions defining the content of the source document;
processing means for generating a set of different patterns or portions of pattern; and,
printing means for printing a plurality of copies of the source document in which each printed copy comprises both the content of the source document and one of the patterns of the set.

**16.** A data carrier which carries program instructions which when processed by a controller of a photocopier cause the controller to:

receive an input image from a scanner of the photocopier;
modify the input image to produce a modified image by embedding a pattern of positional markings within the image of the scanned document which markings can be detected by a suitable detection system and used to distinguish different positions on the documents; and,
pass the output image to a printer of the photocopier.

Fig 1

Fig 2

Fig 3

300

100

302 — P.C.

310

308 — PRINTER

NETWORK

A.S.H. — 306

A.S.H. — 307

EPLS SERVER — 304

Database

Fig 4

300

322

318

PRIOR ART

320

310

316    314    312

EP 1 515 263 A2

Fig 5

Create content

600

Convert to PDF

602

Define pattern areas

604

Fig 6

Allocate function to pattern areas

606

Name document

608

Fig 7 (a)

Fig 7 (b)

Fig 8 (a)

PATTERN ALLOCATOR ⌐720

PATTERN ALLOCATION OR SUPPLY UNIT

720 ⌐

SEED/ID

PRINT INSN'S : CONTENT + "URL" + SEED/ID

APPLICATION → PRINTER DRIVER → PRINTER CONTROLLER

URL

DOCUMENT

700

RIP (content)

PATTERN GENERATOR

COMBINED BITMAP TO PRINT ENGINE

710

PRINTED DOCUMENT

Fig 8 (b)

| PRINT | INSTRUCTIONS |
|-------|--------------|
| PCL | CONTENT INSTRUCTIONS |
| PSL | PATTERN INSTRUCTION = "URL and ID of pattern |

24

Fig 8 (c)

| PRINT | INSTRUCTION |
|-------|-------------|
| PCL | CONTENT INSTRUCTION |
| PJL | PATTERN INSTRUCTION = ADD PATTERN |

Fig 8(d)

PRINT INSTRUCTIONS

| PCL | CONTENT INSTRUCTIONS |
|-----|---------------------|
| PSL | PATTERN INSTRUCTION = INCOMPLETE PATTERN DESCRIPTION |

Fig 9 (a)

+V

240

1200

Fig 9 (b)

Place source document on platen

1300

Select Pattern/No pattern

1310

Scan source document

1320

Capture scanned image

1330

Fig 10

Generate pattern

1340

Produce modified image

1350

Print modified image

1360

Fig. 11

Place document on copier
1500

Scan document image
1510

*Fig 12*

Get pattern information and generate
modified copy of document
1520

Publish document on the server
1530

Server

Print modified copy of document
1540

Mark-up document with digital pen
1550

Read strokes and pattern when
marking
1560

Send strokes and pattern to server
1570

Server returns document identity
from pattern
1580